# EUROPEAN PATENT SPECIFICATION

(11) **EP 4 390 803 B1**
(45) Date of publication and mention of the grant of the patent: **14.10.2026**
(21) Application number: 22857418.2
(22) Date of filing: 20.06.2022
(51) Int. Cl.: G06Q 10/08, B65G 1/04, G06K 17/00, G06M 7/00, G06M 9/00

(54) **SUPPLIES INVENTORY METHOD AND APPARATUS, AND DEVICE AND STORAGE MEDIUM**
VERFAHREN UND VORRICHTUNG FÜR VERSORGUNGSINVENTAR SOWIE VORRICHTUNG UND SPEICHERMEDIUM
PROCÉDÉ ET APPAREIL D'INVENTAIRE DE FOURNITURES, ET DISPOSITIF ET SUPPORT DE STOCKAGE

(30) Priority: 20.08.2021 CN 202110960544
(43) Date of publication of application: 26.06.2024
(73) Proprietor: Beijing Jingdong Zhenshi Information Technology Co., Ltd., Beijing 100086 (CN)
(72) Inventor: YANG, Wenxiang, Beijing 100086 (CN); CHEN, Meng, Beijing 100086 (CN)
(74) Representative: Müller-Boré & Partner Patentanwälte PartG mbB
(86) International application number: PCT/CN2022/099785
(87) International publication number: WO 2023/020105

(56) References cited:
- CN-A- 109 264 275
- CN-A- 109 264 275
- CN-A- 110 303 500
- CN-A- 111 144 825
- CN-A- 111 620 032
- CN-A- 113 657 833
- US-A1- 2018 293 543
- US-A1- 2020 034 780

## Description

### TECHNICAL FIELD

The present disclosure relates to the field of computer technology, particularly to the field of warehousing management, and more particularly to a method, apparatus and device for counting supplies and a storage medium.

### BACKGROUND

With the rapid development of e-commerce, in order to improve the efficiency of warehousing operations and enhance customer experience, the degree of warehouse automation is getting higher and higher. In the clothing industry, with the continuous upgrading of brands, the number of clothing categories for which unique RFID (radio frequency identification) tags are selected to perform whole-process tracing is growing. Each commodity is bound to commodity-related information by using an RFID tag, which further creates a better prerequisite for the whole-process automation operation inside a
clothing warehouse.

However, at present, the counting for the clothes with RFID tags in warehouses in the industry is mainly performed by manually scanning commodities using a RFID gun, or the counting for the commodities with the RFID tags is implemented by equipping a drone with an RFID reader, resulting in a low efficiency in counting supplies.

Document CN111620032A discloses a goods counting method and system. Goods counting is at least partially executed by an autonomous mobile robot, and the autonomous mobile robot at least comprises a container taking and putting mechanism and reading equipment. The goods counting method comprises the steps: the autonomous mobile robot receives an instruction issued by a server; the instruction carries position information of a to-be-counted inventory container; the autonomous mobile robot travels to the position of the to-be-counted inventory container according to the instruction and puts the to-be-counted inventory container on an inventory support into the reading range of the reading equipment through the container taking and putting mechanism; the autonomous mobile robot reads identification codes of goods in the to-be-counted inventory container through the reading equipment to obtain goods information of the goods in the to-be-counted inventory container; and the goods information is used for counting.

Document CN109264275A discloses a robot-based intelligent warehouse management method and device and a computer readable storage medium, wherein the robot-based intelligent warehouse management method comprises the following steps: a robot receives an inventory task through a preset rule, the robot moves from a waiting area to storage area of a warehouse, the robot obtains label information on a shelf of the storage area through a visual recognition device, and obtains attribute description data of goods, the robot moves the goods from the shelf to a corresponding inventory area according to the attribute description data of the goods, and in the inventory area, the robot makes an inventory of the goods through an inventory device to generate inventory reports to update inventory information, so that the full automation of warehouse management is achieved.

Document US 2018/293543 A1 discloses a method for tracking stock level within a store includes: at a robotic system, navigating along a first inventory structure in the store, broadcasting radio frequency interrogation signals according to a first set of wireless scan parameters, and recording a first set of wireless identification signals returned by radio frequency identification tags coupled to product units arranged on the first inventory structure; generating a first list of product units arranged on the first inventory structure based on the first set of wireless identification signals; detecting a first product quantity difference between the first list of product units and a first target stock list assigned to the first inventory structure by a planogram of the store; and generating a stock correction prompt for the first inventory structure in response to the first product quantity difference.

### SUMMARY

The invention is defined in the appended independent claims. Further embodiments are provided in the dependent claims.

It should be understood that the content described in this part is not intended to identify key or important features of the embodiments of the present disclosure, and is not
used to limit the scope of the present disclosure. Other features of the present disclosure will be easily understood through the following description.

### BRIEF DESCRIPTION OF THE DRAWINGS

The accompanying drawings are used for a better understanding of the scheme, and do not constitute a limitation to the present disclosure. Here:
Fig. 1 is a diagram of an example system architecture in which an embodiment of the present disclosure may be applied;
Fig. 2 is a schematic layout diagram of a warehouse applied to an embodiment of the present disclosure;
Fig. 3 is a flowchart of a method for counting supplies according to an embodiment of the present disclosure;
Fig. 4 is a flowchart of the method for counting supplies according to another embodiment of the present disclosure;
Fig. 5 is a schematic structural diagram of an AGV in a method for counting supplies according to in an embodiment of the present disclosure;
Fig. 6 is a schematic structural diagram of an apparatus for counting supplies according to an embodiment of the present disclosure; and
Fig. 7 is a block diagram of an electronic device used to implement the method for counting supplies according to embodiments of the present disclosure.

### DETAILED DESCRIPTION OF EMBODIMENTS

Example embodiments of the present disclosure are described below in combination with the accompanying drawings, and various details of the embodiments of the present disclosure are included in the description to facilitate understanding, and should be considered as example only. Accordingly, it should be recognized by one of
ordinary skill in the art that various changes and modifications may be made to the embodiments described herein without departing from the scope of the present disclosure. Also, for clarity and conciseness, descriptions for well-known functions and structures are omitted in the following description.

It should be noted that embodiments in the present disclosure and the features in the embodiments may be combined with each other on a non-conflict basis. Embodiments of the present disclosure will be described below in detail with reference to the accompanying drawings.

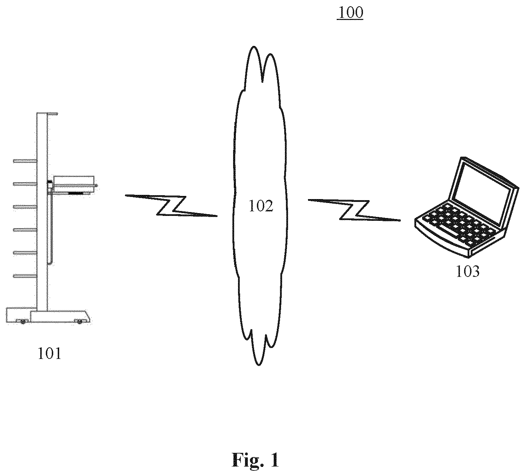

Fig. 1 illustrates an example system architecture 100 in which a method for counting supplies or an apparatus for counting supplies according to embodiments of the present disclosure may be applied.

As shown in Fig. 1, the system architecture 100 may include an AGV (AGV) 101 running in a warehouse, a network 102 and a terminal device 103. The network 102 serves as a medium providing a communication link between the AGV 101 and the terminal device 103. The network 104 may include various types of connections, for example, wired or wireless communication links, or optical fiber cables.

The AGV 101 may receive a transport task sent by the terminal device 103 and perform the transport task, that is, transport a material container stored on a storage location of a rack in the warehouse to a designated position. Various materials such as clothes and books may be stored in the above material container. The materials may be provided with electronic tags. The material container may be placed on the storage location of the rack. The AGV 101 can carry the material container from the storage location of the rack. The AGV 101 may be provided with a card reader for reading the electronic tags of the materials in the material container.

A user may interact with the AGV 101 through the terminal device 103, for example, may receive the identifier of a material in the material container that is sent by the AGV 101, or send the position of a storage location, counting task information, etc. to the AGV 101.

The terminal device 103 may be hardware or software. When being the hardware, the terminal device 103 may be various electronic devices, including, but not limited to, a smartphone, a tablet computer, a laptop portable computer, a desktop computer, etc.. When being the software, the terminal device 103 may be installed in the above listed electronic devices. The terminal device may be implemented as a plurality of pieces of software or a plurality of software modules (e.g., software or software modules for providing a distributed service), or as a single piece of software or a single software module, which will not be specifically defined here.

It should be noted that the method for counting supplies provided by embodiments of the present disclosure is generally performed by the terminal device 103. Correspondingly, the apparatus for counting supplies is generally provided in the terminal device 103.

It should be appreciated that the numbers of the AGVs, the networks and the terminal devices in Fig. 1 are merely illustrative. Any number of AGVs, networks and terminal devices may be provided based on actual requirements.

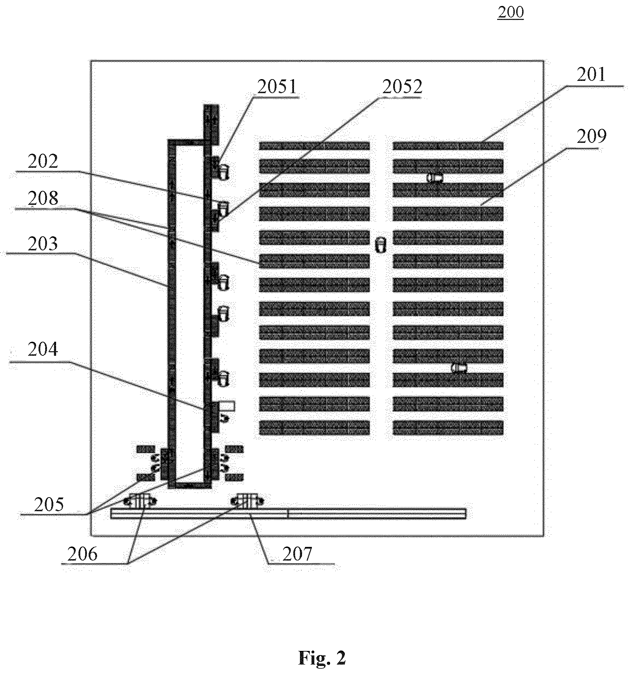

Fig. 2 is a schematic layout diagram of a warehouse to which the method for counting supplies or the apparatus for counting supplies according to embodiments of the present disclosure may be applied. As shown in Fig. 2, the warehouse in this embodiment may include a unit rack 201, an AGV 202, a roller conveyor line 203, a counting workstation 204, a picking workstation 205, a packaging workstation 206, and a package conveyor line 207. Here, the picking workstation 205 may further include a picking stock-in temporary storage location 2051 and a picking stock-out temporary storage location 2052. The unit rack 201 may include a plurality of storage locations, and one material container 208 is placed on each storage location. The material container may be a material basket, a transfer box, or the like. A lane way 209 may be formed between two unit racks 201, and an AGV 202 may travel on the lane way to transport a material container. The AGV 202 may transport the material container to the roller conveyor line 203, and the roller conveyor line 203 may transport the material container to the counting workstation 204, the picking workstation 205 and the packaging workstation 206. The worker at the counting workstation 204 may count the material(s) in the material container. The worker at the picking workstation 205 may perform picking on the material(s) in the material container. The worker at the packaging workstation 206 may package a material and place the packaged package on the package conveyor line 207 to transport the package.

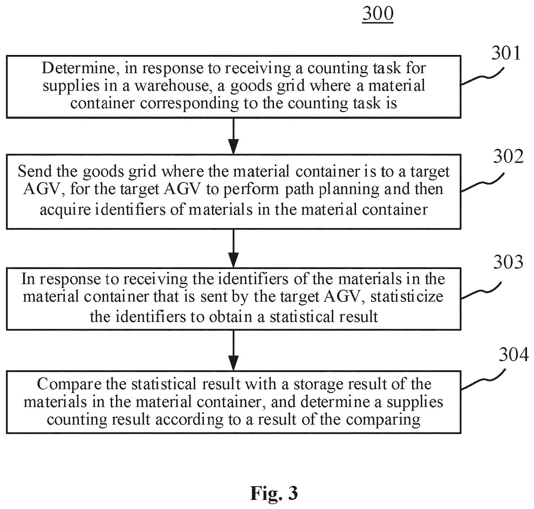

Further referring to Fig. 3, Fig. 3 illustrates a flow 300 of a method for counting supplies according to an embodiment of the present disclosure. The method for counting supplies in this embodiment includes the following operations.

Step 301, determining, in response to receiving a counting task for supplies in a warehouse, a goods grid where a material container corresponding to the counting task is.

**In** this embodiment, an executing body of the method for counting supplies may receive the counting task for the supplies in the warehouse. The above counting task may include the goods grid where the material container is. The executing body may analyze the counting task to determine the goods grid where the material container in which the material to be counted this time is.

Step 302, sending the goods grid where the material container is to a target automated guided vehicle (AGV), for the target AGV to perform path planning and then acquire identifiers of materials in the material container.

After determining the goods grid where the material container is, the executing body may send the above goods grid to the target AGV. Here, the target AGV may be a currently idle AGV. The executing body may acquire the states of AGVs in the warehouse in real time, thereby determining which AGVs are idle and which AGVs are busy. After receiving the goods grid where the above material container is, the target AGV may convert the position of the goods grid to the coordinate system where the AGV is. In this way, the target AGV may perform the path planning. The target AGV may travel along a planned path to the lane way corresponding to the goods grid where the material container is, and may control the mechanical arm of the target AGV to take the material container out of the goods grid after traveling to the position corresponding to the above goods grid.

In this embodiment, the target AGV may read the identifiers of the materials in the material container by various means. For example, the target AGV may acquire the identifiers by reading the electronic tags of the materials in the material container through an installed card reader, or determine the identifiers by collecting image(s) of the materials in the material container through an installed image collection apparatus.

Step 303, statisticizing, in response to receiving the identifiers of the materials in the material container that are sent by the target AGV, the identifiers to obtain a statistical result.

After receiving the identifiers of the materials in the material container that are sent by the target AGV, the executing body may statisticize the identifiers. That is, the executing body needs to determine the number of materials having the same identifiers. For example, the number of clothes of a model A1 and a size B1 is k1, the number of clothes of the model A1 and a size B2 is k2, and so on.

Step 304, comparing the statistical result with a storage result of the materials in the material container, and determining a supplies counting result according to a result of the comparing.

The executing body may compare the above statistical result with the storage result of the materials in the material container. If the two results are consistent, it is considered that the storage result is correct, and accordingly, the counting ends, and corresponding prompt information may be outputted at the same time. If the two results are inconsistent, it is considered that there is a difference between the storage result and the statistical result, and accordingly, corresponding prompt information may be outputted, a recounting task may be generated, or the like.

According to the method for counting supplies provided in the above embodiment of the present disclosure, the supplies in the warehouse can be quickly counted, thereby improving the efficiency of counting the supplies.

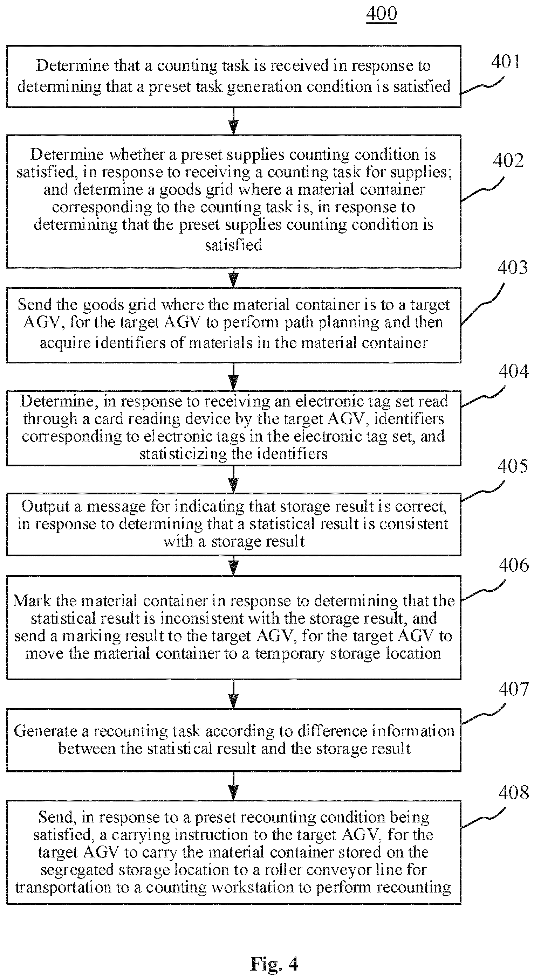

Further referring to Fig. 4, Fig. 4 illustrates a flow 400 of a method for counting supplies according to another embodiment of the present disclosure. As shown in Fig. 4, the method in this embodiment may include the following steps.

Step 401, determining that a counting task is received in response to determining that a preset task generation condition is satisfied.

In this embodiment, the executing body may detect, in real time, whether the preset task generation condition is satisfied. If the preset task generation condition is satisfied, that the counting task is received is determined. Here, the preset task generation condition may refer to reaching a preset moment, a preset length of time elapsed since the last counting task is generated, or the like.

Step 402, in response to receiving the counting task for supplies, determining whether a preset supplies counting condition is satisfied; and in response to determining that the preset supplies counting condition is satisfied, determining a goods grid where a material container corresponding to the counting task is.

If the executing body confirms that the counting task for the supplies is received, the executing body may further determine whether the preset supplies counting condition is satisfied. The above preset supplies counting condition may include, but not limited to, reaching a preset moment, the number of workers in a warehouse being less than a preset threshold, and the like. If the preset supplies counting condition is satisfied, the counting task is further analyzed, to determine the goods grid where the corresponding material container is.

Step 403, sending the goods grid where the material container is to a target AGV, for the target AGV to perform path planning and then acquire identifiers of materials in the material container.

After determining the goods grid where the material container is, the executing body may send the above goods grid to the target AGV. In this way, the target AGV may plan a path according to its own position and the position of the goods grid. Moreover, the target AGV may travel to the goods grid according to the above path, and take out the above material container. In this embodiment, the target AGV may be provided with a card reader, and each material in the material container may be provided with an RFID (radio frequency identification) tag. The above card reader can read the information of the RFID tag and send the above information to the executing body.

Step 404, determining, in response to receiving an electronic tag set read through a card reading device by the target AGV, identifiers corresponding to electronic tags in the electronic tag set, and statisticizing the identifiers.

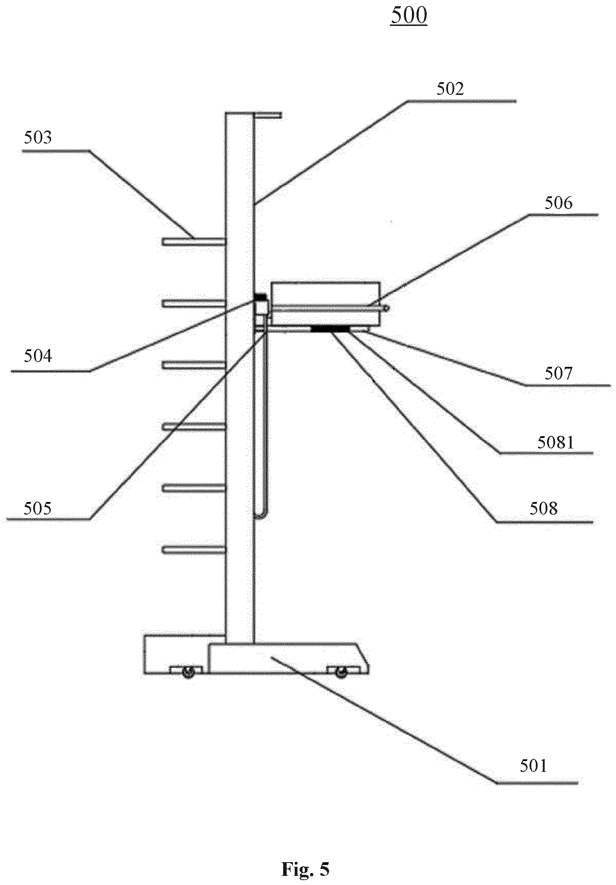

In this embodiment, the structure of the target AGV is as shown in Fig. 5. The structure of the target AGV may include an AGV base 501, a frame 502, a material container temporary storage location 503, a position sensor 504, an elevating apparatus 505, a telescopic arm 506, a material container pick-and-place location 507, and an RFID reader 508. Here, the AGV base 501 is provided with a mobile apparatus such as a wheel, and the frame 502 is used to fix the various components. The material container temporary storage location 503 is used to temporarily store a marked material container. The position sensor 504 is used to detect the position of the AGV. The telescopic arm 506 can telescope in and out to pick and place the material container. The telescopic arm 506 may place the picked material container on the material container pick-and-place location 507. The RFID reader 508 may be provided on the material container pick-and-place location 507, to read the identifiers of the materials in the material container. In some detailed applications, the above RFID reader 508 may be provided with a protective layer 5081 to protect the RFID reader 508.

The executing body may analyze and statisticize the electronic tag set read by the target AGV through the card reading device (e.g., the RFID reader), to determine the identifiers corresponding to electronic tags in the electronic tag set. In particular, the executing body may directly use the electronic tags as the identifiers, or determine the model numbers of the materials according to the electronic tags and use the model numbers as the identifiers. Finally, statisticizing is performed on the identifiers.

Step 405, in response to determining that a statistical result is consistent with a storage result, outputting a message for indicating that the storage result is correct.

If the executing body determines that the statistical result of materials in the material container is consistent with the storage result of the materials in the material container, it indicates that the storage result is correct. Accordingly, the executing body may output the message for indicating that the storage result is correct.

Step 406, marking the material container in response to determining that the statistical result is inconsistent with the storage result, and sending a marking result to the target AGV for the target AGV to move the material container to a temporary storage location.

In this embodiment, if the statistical result is inconsistent with the storage result, it indicates that the storage result is incorrect, and it is required to perform recounting. In order to avoid a decrease in the counting efficiency due to the movement of the material container with difference information, the executing body may first mark the above material container. In particular, the executing body may implement the marking on the material container by setting a tag for the original storage location of the material container. After the marking, the target AGV moves the material container to the temporary storage location. Here, the temporary storage location may be a position on the target AGV that is used for storing the material container. In this way, on the one hand, the target AGV can continue to perform the counting task, and on the other hand, it is possible to separate the material container with difference information from other material containers.

Step 407, generating a recounting task according to difference information between the statistical result and the storage result.

If the executing body affirms that the statistical result is inconsistent with the storage result, the difference information between the two results can be determined. Moreover, the recounting task is generated according to the above difference information.

When the recounting is performed, it can be determined whether the difference information is correct. The above difference information may include a difference between the identifiers of the materials, a difference in quantity, a difference in batch, and the like.

**In** some alternative implementations of this embodiment, the executing body may generate the recounting task by: determining a segregated storage location for storing the material container; and generating the recounting task according to the difference information and the segregated storage location.

**In** this implementation, if the storage result of the materials is incorrect, the executing body may first determine the segregated storage location for storing the material container. Then, the executing body may generate the recounting task according to the difference information and the segregated storage location. Here, the segregated storage location may be a storage location on which the material container with difference information is temporarily stored. The AGV may move the above material container from the original storage location to the above segregated storage location.

The executing body may determine the segregated storage location by: determining the segregated storage location according to distances between storage locations in each lane way and a roller conveyor line.

**In** this embodiment, the executing body may determine the distances between storage locations in each lane way in the warehouse and the roller conveyor line, and determine the segregated storage location according to the above distances. In particular, the executing body may rank storage locations according to the distances between storage locations and the roller conveyor line in a descending order. The first N storage locations in the above ranking are used as segregated storage locations.

**In** some other implementations, the executing body may use a storage location located at a high position in the storage locations of the same distance as the segregated storage location.

After determining the segregated storage location, the executing body may send the position of the segregated storage location to the target AGV. Accordingly, the target AGV may transport the material container from the temporary storage location to the segregated storage location when a preset carrying condition is satisfied. The above preset carrying condition may include, but not limited to, the temporary storage location being fully occupied, the counting task being completed, and the like.

**In** some alternative implementations of this embodiment, the number of segregated storage locations is the same as or in a multiple times relationship with the number of temporary storage locations. For example, if the number of the temporary storage locations in the AGV is 5, the number of the segregated storage locations in a single lane way may be 5, 10, 15, etc.. Accordingly, the AGV can place the material containers on the temporary storage locations therein on the segregated storage locations at a time.

Step 408, sending, in response to a preset recounting condition being satisfied, a carrying instruction to the target AGV, for the target AGV to carry the material container stored on the segregated storage location to a roller conveyor line for transportation to a counting workstation to perform recounting.

**In** this embodiment, the executing body may further send the carrying instruction to the target AGV when the preset recounting condition is satisfied. Here, the recounting condition may include, but not limited to, the arrival of a worker at the counting workstation, reaching the work start time for the warehouse, and the like. After receiving the carrying instruction, the target AGV may carry the material container stored on the segregated storage location to the roller conveyor line for transportation to the counting workstation to perform the recounting.

According to the method for counting supplies provided in the above embodiment of the present disclosure, when storage result of the materials in the material container is incorrect, the AGV may be controlled to temporarily store the material container on the temporary storage location, and to carry the material container to the segregated storage location in a certain situation. Moreover, the recounting task is generated according to the segregated storage location, for a counting worker to further count the materials.

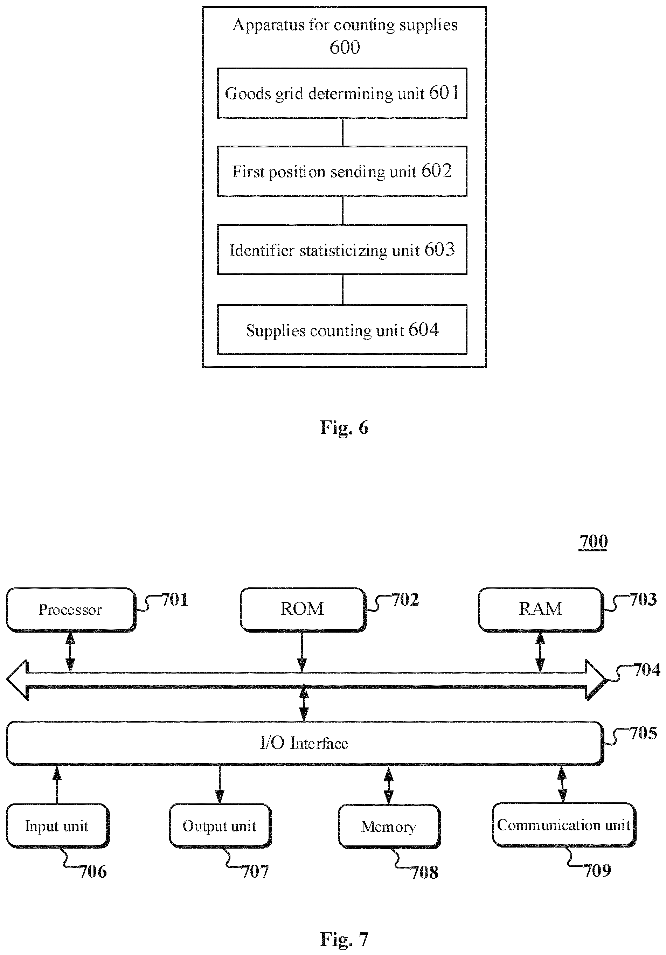

Further referring to Fig. 6, as an implementation of the method shown in the above drawings, an embodiment of the present disclosure provides an apparatus for counting supplies. The embodiment of the apparatus corresponds to the embodiment of the method shown in Fig. 2. The apparatus may be applied in various electronic devices.

As shown in Fig. 6, the apparatus 600 for counting supplies in this embodiment comprises: a goods grid determining unit 601, a first position sending unit 602, an identifier statisticizing unit 603 and a supplies counting unit 604.

The goods grid determining unit 601 is configured to determine, in response to receiving a counting task for supplies in a warehouse, a goods grid where a material container corresponding to the counting task is.

The first position sending unit 602 is configured to send the goods grid where the material container is to a target automated guided vehicle (AGV), for the target AGV to perform path planning and acquire identifiers of materials in the material container.

The identifier statisticizing unit 603 is configured to statisticize, in response to receiving the identifiers of the materials in the material container that are sent by the target AGV, the identifiers to obtain a statistical result.

The supplies counting unit 604 is configured to compare the statistical result with a storage result of the materials in the material container and determining a supplies counting result according to a result of the comparing.

**In** some alternative implementations of this embodiment, the apparatus 600 may further comprise: a task receiving unit (not shown in Fig. 6), configured to determine that the counting task is received in response to determining that a preset task generation condition is satisfied.

**In** some alternative implementations of this embodiment, the goods grid determining unit 601 may be further configured to: in response to receiving the counting task for the supplies, determine whether a preset supplies counting condition is satisfied; in response to determining that the preset supplies counting condition is satisfied, determine the goods grid where the material container corresponding to the counting task is.

**In** some alternative implementations of this embodiment, the materials are provided with electronic tags, and the AGV is provided with a card reading device. The identifier statisticizing unit 603 may be further configured to determine, in response to receiving an electronic tag set read through the card reading device by the target AGV, the identifiers corresponding to electronic tags in the electronic tag set, and statisticize the identifiers.

**In** some alternative implementations of this embodiment, the supplies counting unit 604 may be further configured to output a message for indicating that the storage result is correct in response to determining that the statistical result is consistent with the storage result.

**In** some alternative implementations of this embodiment, the supplies counting unit 604 may be further configured to mark the material container in response to determining that the statistical result is inconsistent with the storage result, and sending a marking result to the target AGV for the target AGV to move the material container to a temporary storage location; and generate a recounting task according to difference information between the statistical result and the storage result.

**In** some alternative implementations of this embodiment, the supplies counting unit 604 may be further configured to determine a segregated storage location for storing the material container; and generate the recounting task according to the difference information and the segregated storage location.

**In** some alternative implementations of this embodiment, the warehouse comprises lane ways formed between a plurality of racks and a roller conveyor line for conveying materials. The supplies counting unit 604 may be further configured to determine the segregated storage location according to distances between storage locations in each lane way and the roller conveyor line.

**In** some alternative implementations of this embodiment, the supplies counting unit 604 may be further configured to determine, for each lane way, a preset number of segregated storage locations according to the distances between the storage locations in the lane way and the roller conveyor line.

**In** some alternative implementations of this embodiment, the apparatus 600 may further comprise: a second position sending unit (not shown in Fig. 6), configured to send a position of the segregated storage location to the target AGV for the target AGV to transport the material container from the temporary storage location to the segregated storage location when a preset carrying condition is satisfied.

**In** some alternative implementations of this embodiment, the apparatus 600 may further comprise: an instruction sending unit (not shown in Fig. 6), configured to send, in response to a preset recounting condition being satisfied, a carrying instruction to the target AGV, for the target AGV to carry the material container stored on the segregated storage location to the roller conveyor line for transportation to a counting workstation to perform recounting.

It should be understood that the units 601-604 in the apparatus 600 for counting supplies respectively correspond to the operations in the method described with reference to Fig. 2. Therefore, the operations and features described above for the method for counting supplies are also applicable to the apparatus 600 and the units contained therein, and thus will not be repeatedly described here.

In the technical solution of the present disclosure, the acquisition, storage, application, etc. of the personal information of a user all comply with the provisions of the relevant laws and regulations, and do not violate public order and good customs.

According to an embodiment of the present disclosure, an electronic device, a readable storage medium and a computer program product are provided.

Fig. 7 is a block diagram of an electronic device 700 according to an embodiment of the present disclosure that performs the method for counting supplies. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit the implementations of the present disclosure described and/or claimed herein.

As shown in Fig. 7, the device 700 includes a computing unit 701, which may execute various appropriate actions and processes in accordance with a program stored in a read-only memory (ROM) 702 or a program loaded into a random access memory (RAM) 703 from a storage portion 708. The RAM 703 also stores various programs and data required by operations of the system 700. The computing unit 701, the ROM 702 and the RAM 703 are connected to each other through a bus 704. An input/output (I/O) interface 705 is also connected to the bus 704.

A plurality of components in device 700 are connected to I/O interface 705, including an input unit 706, such as a keyboard, mouse, etc.; an output unit 707, such as various types of displays, speakers, etc.; a storage unit 708, such as magnetic disks, optical disks, etc.; and communication units 709, such as network cards, modems, wireless communication transceivers, etc.. The communication unit 709 allows device 700 to exchange information/data with other devices through computer networks such as the Internet and/or various telecommunications networks.

The computing unit 701 may be various general-purpose and/or special-purpose processing assemblies having processing and computing capabilities. Some examples of the computing unit 701 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc.. The computing unit 701 performs the various methods and processes described above, for example, the method for counting supplies. For example, in some embodiments, method for counting supplies may be implemented as a computer software program, which is tangibly included in a machine readable medium, for example, the storage unit 708. In some embodiments, part or all of the computer program may be loaded into and/or installed on the device 700 via the ROM 702 and/or the communication unit 709. When the computer program is loaded into the RAM 703 and executed by the computing unit 701, one or more operations of the above method for counting supplies may be performed. Alternatively, in other embodiments, the computing unit 701 may be configured to perform the method for counting supplies through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. The above program codes may be packaged into a computer program product. These program codes may be provided to a processor or controller of a general-purpose computer, specific-purpose computer or other programmable data processing apparatus, so that the program codes, when executed by the processor 701, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The Server may be a cloud server, also known as cloud computing server or cloud host, solves the problems of difficult management and weak
business expansibility in traditional physical host and VPS services (" Virtual Private Server", or referred to as "VPS"). The server can also be a server of a distributed system, or a server that incorporates a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the present disclosure are intended to be included within the scope of the present disclosure.

## Claims

1. A method for counting supplies, comprising:
determining (301), in response to receiving a counting task for supplies in a warehouse, a goods grid where a material container corresponding to the counting task is;
sending (302, 403) the goods grid where the material container is to a target automated guided vehicle, AGV, for the target AGV to perform path planning and acquire identifiers of materials in the material container;
statisticizing (303), in response to receiving the identifiers of the materials in the material container that are sent by the target AGV, the identifiers to obtain a statistical result;
comparing (304) the statistical result with a storage result of the materials in the material container and determining a supplies counting result according to a result of the comparing, comprising:
marking (406) the material container in response to determining that the statistical result is inconsistent with the storage result, and sending a marking result to the target AGV for the target AGV to move the marked material container to a temporary storage location (503) from the goods grid where the material container is, **characterized in that**
generating (407) a recounting task for the marked material container according to difference information between the statistical result and the storage result, the generating (407) a recounting task for the marked material container according to difference information between the statistical result and the storage result comprising:
determining a segregated storage location for storing the marked material container, and generating the recounting task for the marked material container according to the difference information and the segregated storage location, and further comprising sending a position of the segregated storage location to the target AGV, for the target AGV to transport the marked material container from the temporary storage location (503) to the segregated storage location when a preset carrying condition is satisfied;
the method further comprising:
sending (408), in response to a preset recounting condition being satisfied, a carrying instruction to the target AGV, for the target AGV to carry the marked material container stored on the segregated storage location to a roller conveyor line for transportation to a counting workstation to perform recounting.

2. The method according to claim 1, wherein the determining (301), in response to receiving the counting task for the supplies in the warehouse, the goods grid where the material container corresponding to the counting task is, comprises:
in response to receiving the counting task for the supplies, determining (402) whether a preset supplies counting condition is satisfied; and
in response to determining that the preset supplies counting condition is satisfied, determining (402) the goods grid where the material container corresponding to the counting task is.

3. The method according to claim 1 or claim 2, wherein the materials are provided with electronic tags, and the AGV is provided with a card reading device; and
the statisticizing (303), in response to receiving the identifiers of the materials in the material container that are sent by the target AGV, the identifiers to obtain the statistical result, comprises:
determining (404), in response to receiving an electronic tag set read through the card reading device by the target AGV, the identifiers corresponding to electronic tags in the electronic tag set, and
statisticizing (404) the identifiers.

4. The method according to any preceding claim, wherein the warehouse comprises lane ways formed between a plurality of racks (201) and a roller conveyor line (203) for conveying materials; and
the determining the segregated storage location for storing the material container comprises:
determining the segregated storage location according to distances between storage locations in each lane way (201) and the roller conveyor line (203).

5. The method according to claim 4, wherein the determining the segregated storage location for storing the material container comprises:
determining, for each lane way (201), a preset number of segregated storage locations according to the distances between the storage locations in the lane way (201) and the roller conveyor line (203).

6. The method according to any preceding claim, wherein the goods grid comprises a plurality of unit racks, each unit rack comprises a plurality of storage locations, each storage location is an original storage location for receiving one of the material container, and the segregated storage location is determined from the plurality of storage locations.

7. The method according to any preceding claim, wherein the segregated storage location is used for storing the marked material container that is to be moved to the counting station to perform recounting, or comprises a high position in storage locations of the same distance.

8. The method according to any one of claims 4 to 7, wherein the determining the segregated storage location according to distances between storage locations in each lane way and the roller conveyor line further comprises ranking storage locations according to distances between storage locations and the roller conveyor line in a descending order, and using the first N storage locations in the ranking as segregated storage locations.

9. The method according to any preceding claim, wherein a plurality of temporary storage locations are arranged on the AGV, and each of the plurality of temporary storage locations is configured to receive one material container.

10. The method according to claim 9, wherein a number of the segregated storage locations is in a multiple times relationship with a number of the plurality of temporary storage locations.

11. The method according to any preceding claim, wherein the marking (406) the material container comprises: setting a tag for an original storage location of the material container.

12. An apparatus (600) for counting supplies, comprising:
a goods grid determining unit (601), configured to determine (301), in response to receiving a counting task for supplies in a warehouse, a goods grid where a material container corresponding to the counting task is;
a first position sending unit (602), configured to send (302, 403) the goods grid where the material container is to a target automated guided vehicle, AGV, for the target AGV to perform path planning and acquire identifiers of materials in the material container;
an identifier statisticizing unit (603), configured to statisticize (303), in response to receiving the identifiers of the materials in the material container that are sent by the target AGV, the identifiers to obtain a statistical result;
a supplies counting unit (604), configured to compare (304) the statistical result with a storage result of the materials in the material container and determine a supplies counting result according to a result of the comparing, comprising the supplies counting unit is configured to:
mark (406) the material container in response to determining that the statistical result is inconsistent with the storage result, and send a marking result to the target AGV for the target AGV to move the marked material container to a temporary storage location (503) from the goods grid where the material container is, **characterized in that** the supplies counting unit is further configured to
generate (407) a recounting task for the marked material container according to difference information between the statistical result and the storage result, the generate (407) a recounting task for the marked material container according to difference information between the statistical result and the storage result comprising:
determining a segregated storage location for storing the marked material container, and generating the recounting task for the marked material container according to the difference information and the segregated storage location, and further comprising
sending a position of the segregated storage location to the target AGV, for the target AGV to transport the marked material container from the temporary storage location (503) to the segregated storage location when a preset carrying condition is satisfied;
the apparatus (600) for counting supplies being further configured to:
send (408), in response to a preset recounting condition being satisfied, a carrying instruction to the target AGV, for the target AGV to carry the material container stored on the segregated storage location to a roller conveyor line for transportation to a counting workstation to perform recounting.

13. A non-transitory computer readable storage medium, storing a computer instruction, wherein the computer instruction is used to cause the computer to perform the method according to any one of claims 1-11.

14. A computer program product, comprising a computer program, wherein the computer program, when executed by a processor, implements the method according to any one of claims 1-11.

## Patentansprüche

1. Verfahren zum Zählen von Vorräten, umfassend:
Bestimmen (301), als Antwort auf das Empfangen einer Zählaufgabe für Vorräte in einem Lager, eines Warenlagersystems, bei dem sich ein Materialbehälter entsprechend der Zählaufgabe befindet;
Senden (302, 403) des Warenlagersystems, bei dem sich der Materialbehälter befindet, zu einem fahrerlosen Ziel-Transportfahrzeug, Ziel-AGV, so dass das Ziel-AGV eine Wegplanung durchführt und Kennungen von Materialien in dem Materialbehälter erfasst;
statistisch Verarbeiten (303), als Antwort auf das Empfangen der Kennungen der Materialien in dem Materialbehälter, die durch das Ziel-AGV gesendet werden, der Kennungen zum Erhalten eines statistischen Ergebnisses;
Vergleichen (304) des statistischen Ergebnisses mit einem Lagerergebnis der Materialien in dem Materialbehälter und Bestimmen eines Vorräte-Zählergebnisses gemäß eines Ergebnisses des Vergleichens, umfassend:
Kennzeichnen (406) des Materialbehälters als Antwort auf das Bestimmen, dass das statistische Ergebnis mit dem Lagerergebnis inkonsistent ist, und Senden eines Kennzeichnungsergebnisses zu dem Ziel-AGV, so dass das Ziel-AGV den gekennzeichneten Materialbehälter von dem Warenlagersystem, wo sich der Materialbehälter befindet, zu einem temporären Lagerort (503) bewegt, **gekennzeichnet durch** das
Erzeugen (407) einer Aufgabe eines erneuten Zählens für den gekennzeichneten Materialbehälter gemäß Differenzinformationen zwischen dem statistischen Ergebnis und dem Lagerergebnis, wobei das Erzeugen (407) einer Aufgabe eines erneuten Zählens für den gekennzeichneten Materialbehälter gemäß Differenzinformationen zwischen dem statistischen Ergebnis und dem Lagerergebnis umfasst:
Bestimmen eines abgesonderten Lagerorts zum Lagern des gekennzeichneten Materialbehälters und Erzeugen der Aufgabe eines erneuten Zählens für den gekennzeichneten Materialbehälter gemäß den Differenzinformationen und dem abgesonderten Lagerort, und ferner umfassend das Senden einer Position des abgesonderten Lagerorts zu dem Ziel-AGV, so dass das Ziel-AGV den gekennzeichneten Materialbehälter von dem temporären Lagerort (503) zu dem abgesonderten Lagerort transportiert,
wenn eine voreingestellte Transportbedingung erfüllt ist;
wobei das Verfahren ferner umfasst:
Senden (408), als Antwort auf das Erfüllen einer voreingestellten Bedingung eines erneuten Zählens, einer Transportanweisung zu dem Ziel-AGV, so dass das Ziel-AGV den gekennzeichneten Materialbehälter, der an dem abgesonderten Lagerort gelagert ist, zu einer Rollenförderanlage zum Transportieren zu einer Zähl-Arbeitsstation zum Durchführen eines erneuten Zählens transportiert.

2. Verfahren nach Anspruch 1, wobei das Bestimmen (301), als Antwort auf das Empfangen der Zählaufgabe für die Vorräte in dem Lager, des Warenlagersystems, wo der Materialbehälter entsprechend der Zählaufgabe vorliegt, umfasst:
als Antwort auf das Empfangen der Zählaufgabe für die Vorräte, Bestimmen (402), ob eine voreingestellte Vorräte-Zählbedingung erfüllt ist; und
als Antwort auf das Bestimmen, dass die voreingestellte Vorräte-Zählbedingung erfüllt ist, Bestimmen (402) des Warenlagersystems, wo sich der Materialbehälter entsprechend der Zählaufgabe befindet.

3. Verfahren nach Anspruch 1 oder Anspruch 2, wobei die Materialien mit elektronischen Kennzeichnungen versehen sind und das AGV mit einer Kartenlesevorrichtung versehen ist; und
das statistische Verarbeiten (303), als Antwort auf das Empfangen der Kennungen der Materialien in dem Materialbehälter, die durch das Ziel-AGV gesendet werden, der Kennungen zum Erhalten des statistischen Ergebnisses umfasst:
Bestimmen (404), als Antwort auf das Empfangen eines elektronischen Kennzeichnungssatzes, der durch die Kartenlesevorrichtung durch das Ziel-AGV gelesen wird, der Kennungen entsprechend elektronischen Kennzeichnungen in dem elektronischen Kennzeichnungssatz, und
statistisch Verarbeiten (404) der Kennungen.

4. Verfahren nach einem der vorhergehenden Ansprüche, wobei das Lager Regalgassen, die zwischen einer Mehrzahl von Regalen (201) ausgebildet sind, und eine Rollenförderanlage (203) zum Fördern von Materialien umfasst; und
das Bestimmen des abgesonderten Lagerorts zum Lagern des Materialbehälters umfasst:
Bestimmen des abgesonderten Lagerorts gemäß Abständen zwischen Lagerorten in jeder Regalgasse (201) und der Rollenförderanlage (203).

5. Verfahren nach Anspruch 4, wobei das Bestimmen des abgesonderten Lagerorts zum Lagern des Materialbehälters umfasst:
Bestimmen, für jede Regalgasse (201), einer voreingestellten Anzahl von abgesonderten Lagerorten gemäß den Abständen zwischen den Lagerorten in der Regalgasse (201) und der Rollenförderanlage (203).

6. Verfahren nach einem der vorhergehenden Ansprüche, wobei das Warenlagersystem eine Mehrzahl von Einheitsregalen umfasst, wobei jedes Einheitsregal eine Mehrzahl von Lagerorten umfasst, wobei jeder Lagerort ein ursprünglicher Lagerort zum Aufnehmen eines der Materialbehälter ist und der abgesonderte Lagerort von der Mehrzahl von Lagerorten bestimmt wird.

7. Verfahren nach einem der vorhergehenden Ansprüche, wobei der abgesonderte Lagerort zum Lagern des gekennzeichneten Materialbehälters verwendet wird, der zu der Zählstation zum Durchführen eines erneuten Zählens bewegt werden soll, oder eine hohe Position in Lagerorten mit dem gleichen Abstand umfasst.

8. Verfahren nach einem der Ansprüche 4 bis 7, wobei das Bestimmen des abgesonderten Lagerorts gemäß Abständen zwischen Lagerorten in jeder Regalgasse und der Rollenförderanlage ferner das Einstufen von Lagerorten gemäß Abständen zwischen Lagerorten und der Rollenförderanlage in einer absteigenden Reihenfolge und Verwenden der ersten N Lagerorte in dem Einstufen als abgesonderte Lagerorte umfasst.

9. Verfahren nach einem der vorhergehenden Ansprüche, wobei eine Mehrzahl von temporären Lagerorten auf dem AGV angeordnet ist und jeder der Mehrzahl von temporären Lagerorten zum Aufnehmen von einem Materialbehälter ausgebildet ist.

10. Verfahren nach Anspruch 9, wobei eine Anzahl der abgesonderten Lagerorte in einer Mehrfachbeziehung mit einer Anzahl der Mehrzahl von temporären Lagerorten steht.

11. Verfahren nach einem der vorhergehenden Ansprüche, wobei das Kennzeichnen (406) des Materialbehälters umfasst: Setzen einer Kennzeichnung für einen ursprünglichen Lagerort des Materialbehälters.

12. Vorrichtung (600) zum Zählen von Vorräten, umfassend:
eine Warenlagersystem-Bestimmungseinheit (601), die zum Bestimmen (301), als Antwort auf das Empfangen einer Zählaufgabe für Vorräte in einem Lager, eines Warenlagersystems, wo ein Materialbehälter entsprechend der Zählaufgabe vorliegt, ausgebildet ist;
eine erste Positionssendeeinheit (602), die zum Senden (302, 403) des Warenlagersystems, wo der Materialbehälter vorliegt, zu einem fahrerlosen Ziel-Transportfahrzeug, Ziel-AGV, ausgebildet ist, so dass das Ziel-AGV eine Wegplanung durchführt und Kennungen von Materialien in dem Materialbehälter erfasst;
eine Einheit zum statistischen Verarbeiten einer Kennung (603), die zum statistischen Verarbeiten (303), als Antwort auf das Empfangen der Kennungen der Materialien in dem Materialbehälter, die durch das Ziel-AGV gesendet werden, der Kennungen zum Erhalten eines statistischen Ergebnisses ausgebildet ist;
eine Vorräte-Zähleinheit (604), die zum Vergleichen (304) des statistischen Ergebnisses mit einem Lagerergebnis der Materialien in dem Materialbehälter und Bestimmen eines Vorräte-Zählergebnisses gemäß einem Ergebnis des Vergleichens ausgebildet ist, umfassend, dass die Vorräte-Zähleinheit ausgebildet ist zum:
Kennzeichnen (406) des Materialbehälters als Antwort auf das Bestimmen, dass das statistische Ergebnis mit dem Lagerergebnis inkonsistent ist, und Senden eines Kennzeichnungsergebnisses zu dem Ziel-AGV, so dass das Ziel-AGV den gekennzeichneten Materialbehälter von dem Warenlagersystem, wo der Materialbehälter vorliegt, zu einem temporären Lagerort (503) bewegt, **dadurch gekennzeichnet, dass** die Vorräte-Zähleinheit ferner ausgebildet ist zum
Erzeugen (407) einer Aufgabe eines erneuten Zählens für den gekennzeichneten Materialbehälter gemäß Differenzinformationen zwischen dem statistischen Ergebnis und dem Lagerergebnis, wobei das Erzeugen (407) einer Aufgabe eines erneuten Zählens für den gekennzeichneten Materialbehälter gemäß Differenzinformationen zwischen dem statistischen Ergebnis und dem Lagerergebnis umfasst:
Bestimmen eines abgesonderten Lagerorts zum Lagern des gekennzeichneten Materialbehälters und Erzeugen der Aufgabe eines erneuten Zählens für den gekennzeichneten Materialbehälter gemäß den Differenzinformationen und dem abgesonderten Lagerort, und ferner umfassend das
Senden einer Position des abgesonderten Lagerorts zu dem Ziel-AGV, so dass das Ziel-AGV den gekennzeichneten Materialbehälter von dem temporären Lagerort (503) zu dem abgesonderten Lagerort transportiert, wenn eine voreingestellte Transportbedingung erfüllt ist;
wobei die Vorrichtung (600) zum Zählen von Vorräten ferner ausgebildet ist zum:
Senden (408), als Antwort darauf, dass eine voreingestellte Bedingung eines erneuten Zählens erfüllt ist, einer Transportanweisung zu dem Ziel-AGV, so dass das Ziel-AGV den Materialbehälter, der an dem abgesonderten Lagerort gelagert ist, zu einer Rollenförderanlage zum Transportieren zu einer Zähl-Arbeitsstation zum Durchführen eines erneuten Zählens transportiert.

13. Nicht-flüchtiges computerlesbares Speichermedium, das eine Computeranweisung speichert, wobei die Computeranweisung zum Bewirken verwendet wird, dass der Computer das Verfahren nach einem der Ansprüche 1 bis 11 durchführt.

14. Computerprogrammprodukt, das ein Computerprogramm umfasst, wobei das Computerprogramm, wenn es durch einen Prozessor ausgeführt wird, das Verfahren nach einem der Ansprüche 1 bis 11 implementiert.

## Revendications

1. Un procédé de comptage de fournitures, comprenant :
la détermination (301), en réponse à la réception d'une tâche de comptage de fournitures dans un entrepôt, d'une grille de marchandises où se trouve un conteneur de matériel correspondant à la tâche de comptage ;
l'envoi (302, 403) de la grille de marchandises, où se trouve le conteneur de matériel, à un véhicule à guidage automatique (automated *guided vehicle* - AGV) cible, afin que cet AGV cible effectue la planification de son parcours et acquière des identifiants des matériels dans le conteneur de matériel ;
la statistisation (303), en réponse à la réception des identifiants des matériels présents dans le conteneur de matériel qui sont envoyés par l'AGV cible, des identifiants afin d'obtenir un résultat statistique ;
la comparaison (304) du résultat statistique avec un résultat de stockage des matériels présents dans le conteneur de matériel et la détermination d'un résultat de comptage des fournitures conformément au résultat de cette comparaison, comprenant :
le marquage (406) du conteneur de matériel en réponse à la détermination que le résultat statistique est incohérent avec le résultat de stockage, et l'envoi d'un résultat de marquage à l'AGV cible afin que l'AGV cible déplace le conteneur de matériel marqué vers un emplacement de stockage temporaire (503) depuis la grille de marchandises où se trouve le conteneur de matériel, **caractérisé en ce que :**
la génération (407) d'une tâche de recomptage pour le conteneur de matériel marqué conformément à des informations de différence entre le résultat statistique et le résultat de stockage, la génération (407) d'une tâche de recomptage pour le conteneur de matériel marqué conformément à des informations de différence entre le résultat statistique et le résultat de stockage comprenant :
la détermination d'un emplacement de stockage séparé pour stocker le conteneur de matériel marqué, et la génération de la tâche de recomptage pour le conteneur de matériel marqué conformément aux informations de différence et de l'emplacement de stockage séparé, et comprenant en outre l'envoi d'une position de l'emplacement de stockage séparé à l'AGV cible, afin que l'AGV cible transporte le conteneur de matériel marqué de l'emplacement de stockage temporaire (503) vers l'emplacement de stockage séparé lorsqu'une condition de transport prédéfinie est satisfaite ;
le procédé comprenant en outre :
l'envoi (408), en réponse à la satisfaction d'une condition de recomptage prédéfinie, d'une instruction de transport à l'AGV cible, afin que l'AGV cible transporte le conteneur de matériel marqué stocké à l'emplacement de stockage séparé vers une ligne de convoyage à rouleaux pour un transport vers un poste de comptage afin d'effectuer un recomptage.

2. Le procédé d'après la revendication 1, sachant que la détermination (301), en réponse à la réception de la tâche de comptage des fournitures dans l'entrepôt, de la grille de marchandises où se trouve le conteneur de matériel correspondant à la tâche de comptage, comprend :
en réponse à la réception de la tâche de comptage des fournitures, la détermination (402) si une condition de comptage des fournitures prédéfinie est satisfaite ; et
en réponse à la détermination que la condition de comptage des fournitures prédéfinie est satisfaite, la détermination (402) de la grille de marchandises où se trouve le conteneur de matériel correspondant à la tâche de comptage.

3. Le procédé d'après la revendication 1 ou la revendication 2, sachant que les matériels sont munis d'étiquettes électroniques, et que l'AGV est équipé d'un dispositif de lecture de carte ; et que
la statistisation (303), en réponse à la réception des identifiants des matériels présents dans le conteneur de matériel qui sont envoyés par l'AGV cible, des identifiants afin d'obtenir le résultat statistique, comprend :
la détermination (404), en réponse à la réception par l'AGV cible d'un ensemble d'étiquettes électroniques lu via le dispositif de lecture de carte, des identifiants correspondant aux étiquettes électroniques dans l'ensemble d'étiquettes électroniques, et
la statistisation (404) des identifiants.

4. Le procédé d'après l'une quelconque des revendications précédentes, sachant que l'entrepôt comprend des voies formées entre une pluralité de racks (201) et une ligne de convoyage à rouleaux (203) destinée à transporter des matériels ; et que
la détermination de l'emplacement de stockage séparé pour le stockage du conteneur de matériel comprend :
la détermination de l'emplacement de stockage séparé conformément à des distances entre les emplacements de stockage dans chaque voie (201) et la ligne de convoyage à rouleaux (203).

5. Le procédé d'après la revendication 4, sachant que la détermination de l'emplacement de stockage séparé pour le stockage du conteneur de matériel comprend :
la détermination, pour chaque voie (201), d'un nombre prédéfini d'emplacements de stockage séparés conformément aux distances entre les emplacements de stockage dans la voie (201) et la ligne de convoyage à rouleaux (203).

6. Le procédé d'après l'une quelconque des revendications précédentes, sachant que la grille de marchandises comprend une pluralité de racks unitaires, chaque rack unitaire comprend une pluralité d'emplacements de stockage, chaque emplacement de stockage est un emplacement de stockage d'origine destiné à recevoir l'un des conteneurs de matériel, et que l'emplacement de stockage séparé est déterminé parmi la pluralité d'emplacements de stockage.

7. Le procédé d'après l'une quelconque des revendications précédentes, sachant que l'emplacement de stockage séparé est utilisé pour stocker le conteneur de matériel marqué qui est destiné à être déplacé vers le poste de comptage afin d'effectuer un recomptage, ou comprend une position élevée parmi les emplacements de stockage présentant la même distance.

8. Le procédé d'après l'une quelconque des revendications de 4 à 7, sachant que la détermination de l'emplacement de stockage séparé conformément à des distances entre des emplacements de stockage dans chaque voie et la ligne de convoyage à rouleaux comprend en outre le classement par ordre décroissant des emplacements de stockage en fonction de distances entre des emplacements de stockage et la ligne de convoyage à rouleaux, et l'utilisation des N premiers emplacements de stockage du classement comme emplacements de stockage séparés.

9. Le procédé d'après l'une quelconque des revendications précédentes, sachant qu'une pluralité d'emplacements de stockage temporaires est agencée sur l'AGV, et que chacun de la pluralité d'emplacements de stockage temporaires est configuré pour recevoir un conteneur de matériel.

10. Le procédé d'après la revendication 9, sachant que le nombre d'emplacements de stockage séparés est en relation de multiple avec un nombre d'emplacements de stockage temporaires.

11. Le procédé d'après l'une quelconque des revendications précédentes, sachant que le marquage (406) du conteneur de matériel comprend : l'établissement d'une étiquette pour un emplacement de stockage d'origine du conteneur de matériel.

12. Un appareil (600) de comptage de fournitures, comprenant :
une unité de détermination de grille de marchandises (601), configurée pour déterminer (301), en réponse à la réception d'une tâche de comptage de fournitures dans un entrepôt, une grille de marchandises où se trouve un conteneur de matériel correspondant à la tâche de comptage ;
une première unité d'envoi de position (602), configurée pour envoyer (302, 403) la grille de marchandises, où se trouve le conteneur de matériel, à un véhicule à guidage automatique (*automated guided vehicle* - AGV) cible, afin que cet AGV cible effectue la planification de son parcours et acquière des identifiants des matériels dans le conteneur de matériel ;
une unité de statistisation des identifiants (603), configurée pour statistiser (303), en réponse à la réception des identifiants des matériels présents dans le conteneur de matériel qui sont envoyés par l'AGV cible, les identifiants afin d'obtenir un résultat statistique ;
une unité de comptage des fournitures (604), configurée pour comparer (304) le résultat statistique avec un résultat de stockage des matériels présents dans le conteneur de matériel, et déterminer un résultat de comptage des fournitures conformément au résultat de la comparaison, comprenant le fait que l'unité de comptage des fournitures est configurée pour :
marquer (406) le conteneur de matériel en réponse à la détermination que le résultat statistique est incohérent avec le résultat de stockage, et envoyer un résultat de marquage à l'AGV cible afin que l'AGV cible déplace le conteneur de matériel marqué vers un emplacement de stockage temporaire (503) depu**is** la grille de marchandises où se trouve le conteneur de matériel, **caractérisé en ce que** l'unité de comptage des fournitures est en outre configurée pour :
générer (407) une tâche de recomptage pour le conteneur de matériel marqué conformément à des informations de différence entre le résultat statistique et le résultat de stockage, la génération (407) d'une tâche de recomptage pour le conteneur de matériel marqué conformément à des informations de différence entre le résultat statistique et le résultat de stockage comprenant :
la détermination d'un emplacement de stockage séparé pour stocker le conteneur de matériel marqué, et la génération de la tâche de recomptage pour le conteneur de matériel marqué conformément aux informations de différence et de l'emplacement de stockage séparé, et comprenant en outre
l'envoi d'une position de l'emplacement de stockage séparé à l'AGV cible, afin que l'AGV cible transporte le conteneur de matériel marqué de l'emplacement de stockage temporaire (503) vers l'emplacement de stockage séparé lorsqu'une condition de transport prédéfinie est satisfaite ;
l'appareil (600) de comptage des fournitures étant en outre configuré pour :
envoyer (408), en réponse à la satisfaction d'une condition de recomptage prédéfinie, une instruction de transport à l'AGV cible, afin que l'AGV cible transporte le conteneur de matériel stocké à l'emplacement de stockage séparé vers une ligne de convoyage à rouleaux pour un transport vers un poste de comptage afin d'effectuer le recomptage.

13. Un support de stockage non transitoire lisible par ordinateur, stockant une instruction informatique, sachant que l'instruction informatique est utilisée pour amener l'ordinateur à mettre en œuvre le procédé d'après l'une quelconque des revendications de 1 à 11.

14. Un produit de programme informatique, comprenant un programme informatique, sachant que le programme informatique, lorsqu'il est exécuté par un processeur, met en œuvre le procédé d'après l'une quelconque des revendications de 1 à 11.
